# EUROPÄISCHE PATENTSCHRIFT

(11) **EP 1 543 348 B1**
(45) Veröffentlichungstag und Bekanntmachung des Hinweises auf die Patenterteilung: **20.09.2006**
(21) Anmeldenummer: 03718609.5
(22) Anmeldetag: 27.02.2003
(51) Int. Cl.: G01S 13/93, B60R 21/01

(54) **VERFAHREN UND ANORDNUNG ZUM VORBEUGENDEN SCHUTZ VON FAHRZEUGINSASSEN BEI GEFÄHRLICHEN SITUATIONEN**
METHOD AND ARRANGEMENT FOR THE PREVENTIVE PROTECTION OF VEHICLE PASSENGERS IN DANGEROUS SITUATIONS
PROCEDE ET DISPOSITIF DE PROTECTION PREVENTIVE D'OCCUPANTS D'UN VEHICULE EN CAS DE SITUATIONS DANGEREUSES

(30) Priorität: 19.09.2002 DE 10243508
(43) Veröffentlichungstag der Anmeldung: 22.06.2005
(73) Patentinhaber: ROBERT BOSCH GMBH, 70442 Stuttgart (DE)
(72) Erfinder: SCHNEIDER, Marcus, 70563 Stuttgart (DE); KUTTENBERGER, Alfred, 71696 Moeglingen (DE); SOHNKE, Thorsten, 65719 Hofheim (DE); HOETZEL, Juergen, 61197 Florstadt (DE); SCHLICK, Michael, 71229 Leonberg (DE)
(86) Internationale Anmeldenummer: PCT/DE2003/000628
(87) Internationale Veröffentlichungsnummer: WO 2004/029654

(56) Entgegenhaltungen:
- WO-A-99/10803
- DE-A- 19 934 670
- DE-A- 19 949 499
- US-A- 6 087 928

## Beschreibung

### Stand der Technik

Die Erfindung betrifft ein Verfahren zum vorbeugenden Schutz von Fahrzeuginsassen bei gefährlichen Situationen sowie eine Anordnung zur Durchführung des Verfahrens.

Der Schutz von Fahrzeuginsassen im Falle eines Untalles durch Auslösen irreversibler Rückhaltemittel (insbesondere Airbags) ist inzwischen Standard. Dabei wird bei Erfassen eines Aufpralles, insbesondere mittels Beschleunigungssensoren im Fahrzeug, das irreversible Rückhaltemittel pyrotechnisch gezündet.

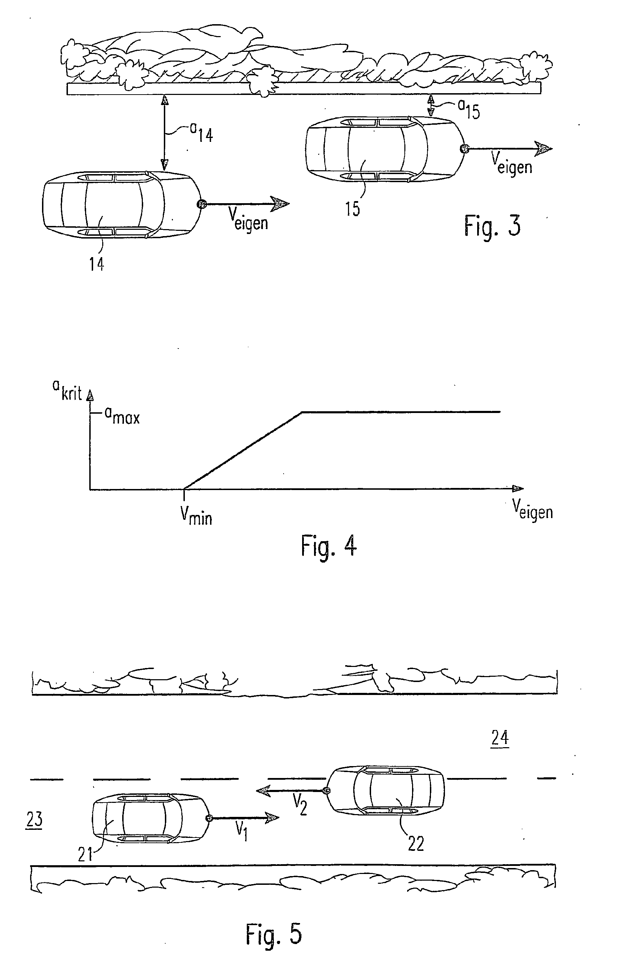

Darüber hinaus ist es zusätzlich üblich geworden, bereits vor dem tatsächlichen Aufprall zu untersuchen, ob die Gefahr eines solchen Aufpralles unmittelbar bevorsteht. Abhängig davon werden die irreversiblen Rückhaltemittel in einen Vorbereitungszustand versetzt, um sehr schnell die tatsächliche Auslösung bei Feststellen des Aufpralles zu ermöglichen. Ferner werden reversible Rückhaltemittel, insbesondere ein elektromotorisch antreibbarer Gurtstraffer, angesteuert, um den betreffenden Fahrzeuginsassen in eine möglichst optimale Position im Sitz zwangszubewegen. Dies sei im folgenden kurz anhand Fig. 5 erläutert. Fig. 5 zeigt zwei Fahrzeuge 21 und 22, die sich mit Eigengeschwindigkeiten V₁ bzw. V₂ aufeinander zubewegen. Während das Fahrzeug 21 auf der ihm zugewiesenen rechten Fahrbahnseite 23 fährt, hat das zweite Fahrzeug 22 die ihm zugewiesene rechte Fahrbahnseite 24 verlassen. Somit besteht die latente Gefahr einer Kollision zwischen den Fahrzeugen 21 und 22. Jedenfalls dann, wenn bei einer bestimmten Relativgeschwindigkeit (V₁ + V₂) der beiden Fahrzeuge 21, 22 zueinander ein bestimmter Abstand zwischen den beiden Fahrzeugen 21 und 22 bzw. die Zeit bis zum Aufprall (Zeit = Abstand/Relativgeschwindigkeit) unterschritten ist, muss eine Kollision als unvermeidbar angesehen werden. Bei Erfassen dieser Situation wird die vorerwähnte vorbeugende Maßnahme eingeleitet.

Diese Vorgehensweise ist grundsätzlich auch anwendbar, wenn sich ein einziges Fahrzeug auf ein stationäres Hindernis bzw. Objekt zubewegt. Auch hier wird eine Auswerteschaltung des Fahrzeuges die Relativgeschwindigkeit gegenüber dem Objekt und den Abstand zu dem Objekt heranziehen, um zu beurteilen, ob eine Kollision bevorsteht oder nicht.

Die herkömmlichen Vorgehensweisen setzen somit das tatsächliche Vorliegen einer Kollision (Crash) oder das Feststellen einer unmittelbar bevorstehenden unvermeidbaren Kollision voraus.

Mit der bekannten Vorgehensweise kann jedoch nicht auf Vorgänge reagiert werden, bei denen das Fahrzeug sich allmählich einem Objekt annähert, etwa einer Leitplanke, einer Wand, parkenden, stehenden oder sehr langsam fahrenden Fahrzeugen oder dgl.. Auch bei einem solchen. Streifkontakt können auf die Fahrzeuginsassen, insbesondere auf nicht-aufmerksame Fahrzeuginsassen, Kräfte einwirken, die etwa durch Aufprall gegen Fahrzeugteile, zu Verletzungen führen können.

Aus WO 99/108 03 A ist ein Verfahren zur Umfeldsensierung eines Fahrzeugs bekannt. Dabei werden Umfeldsensoren eingesetzt, um einen Abstand des Fahrzeugs zu Objekten am Fahrbahnrand zu erkennen. Es wird dabei ein kritischer Abstand festgelegt, dessen Unterschreitung zur Einleitung von Schutzmaßnahmen führt.

Es ist demnach Aufgabe der vorliegenden Erfindung, eine bessere Adaption des Verfahrens an die Fahrsituation zu erreichen.

### Vorteile der Erfindung

Die Aufgabe wird durch ein Verfahren zum vorbeugenden Schutz von Fahrzeuginsassen bei gefährlichen Situationen dadurch gelöst, dass laufend der Abstand des Fahrzeuges zu Objekten am Fahrbahnrand der Größe nach erfasst wird, dass festgestellt wird, ob dieser Abstand einen kritischen Abstand unterscheidet, und dass bei einer solchen Feststellung Schutzmaßnahmen eingeleitet werden.

Dabei kann davon ausgegangen werden, dass geeignete Sensorik zum Erfassen von Objekten im Umfeld bereits im Fahrzeug vorhanden sind und somit auch der relative Abstand des eigenen Fahrzeuges zu Objekten am Fahrbahnrand wie Leitplanken, parkende Autos, Wände oder dgl. erfassbar ist und dass ferner auch Sensoren zur Feststellung der Eigengeschwindigkeit vorhanden sind. Somit ist lediglich eine Auswerteschaltung vorzusehen, in der entschieden wird, ob ein kritischer Abstand unterschritten wird oder nicht. Im gegebenen Fall können dann entsprechende Maßnahmen eingeleitet werden.

Die Erfindung wird durch die Merkmale der Unteransprüche weitergebildet. Eine Anordnung zur Durchführung des Verfahrens zeichnet sich durch entsprechende Sensoren und eine Auswerteschaltung aus.

Vorzugsweise ist der kritische Abstand abhängig von der Relativgeschwindigkeit des Fahrzeugs zum Objekt am Fahrbahnrand bestimmt.

Die Erfindung wird anhand des in der Zeichnung dargestellten Ausführungsbeispieles näher erläutert. Es zeigen:
Zeichnung
   - Fig. 1: schematisch den grundsätzlichen Aufbau einer Anordnung zur Durchführung des erfindungsgemäßen Verfahrens,
   - Fig. 2: schematisch die Folgen und Gefahren der allmählichen Annäherung eines Fahrzeuges an ein fahrzeugrandseitiges Objekt wie eine Leitplanke,
   - Fig. 3: zwei typische Situationen eines Fahrzeuges zur Erläuterung der vorliegenden Erfindung,
   - Fig. 4: den Verlauf der bevorzugten Abhängigkeit des kritischen Abstandes von der Eigengeschwindigkeit,
   - Fig. 5: schematisch die herkömmliche Situation bei einer bevorstehenden Kollision.

### Beschreibung eines Ausführungsbeispieles

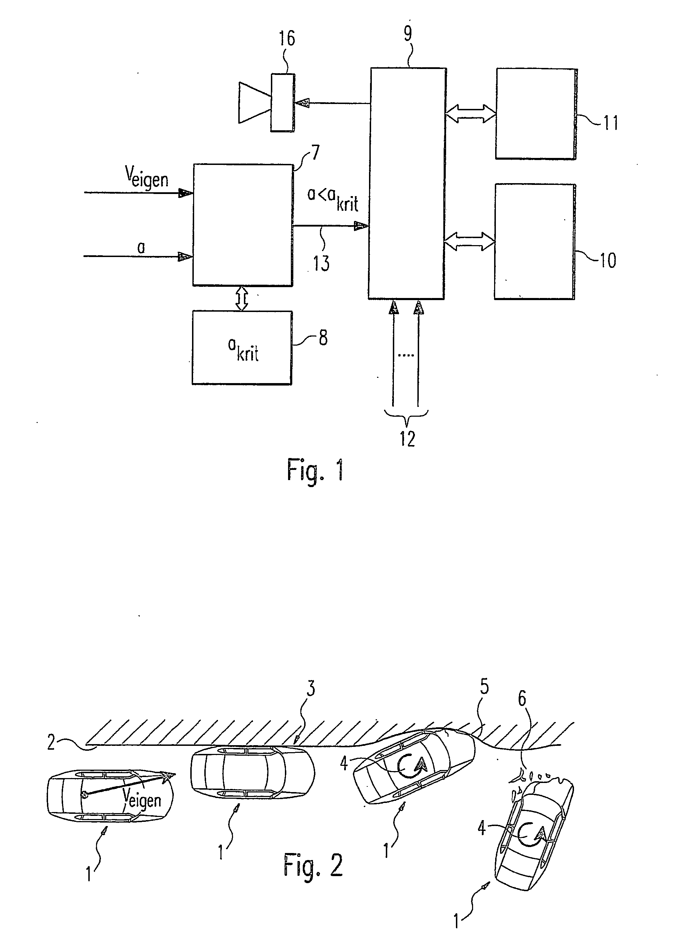

Zunächst seien anhand Fig. 2 die Gefahren bei der allmählichen Annäherung eines Fahrzeuges 1 gegen eine Leitplanke 2 am Fahrzeugrand erläutert. Gemäß Fig. 2 nähert sich das Fahrzeug 2 in den verschiedenen Darstellungen sehr allmählich, d. h. unter sehr geringem Winkel an eine Leitplanke 2 an. Herkömmliche Kollisionserfassungssysteme erkennen diese Situation nicht als (mögliche) Kollision. Solche Situationen können häufig auftreten, etwa bei nachlassender Aufmerksamkeit des Fahrers, ungünstigen Sichtverhältnissen, sich verengender Fahrbahn in Baustellen oder dgl.. Ein Kontakt des Fahrzeuges 1 mit der Leitplanke 2' ist demnach kein Aufprall, sondern ein streifender Kontakt 3, der jedenfalls bei höheren Fahrzeuggeschwindigkeiten V_{eigen} zum Drehimpulsen 4 und damit zu Verformungen 5 an der Leitplanke und 6 am Fahrzeug 1 führen kann. Die so hervorgerufenen Kräfte wirken auch auf die Fahrzeuginsassen, wobei durch die Rotation aufgrund der Drehimpulse 4 große Fliehkräfte auftreten. Deshalb ist es möglich, dass Fahrzeuginsassen gegen Fahrzeugteile geschleudert werden und sich dort verletzen können.

Fig. 1 zeigt eine Anordnung wie erfindungsgemäß auf diese für Fahrzeuginsassen gefährliche Situation reagiert wird.

Mittels geeigneter Sensoren oder mittels Verarbeitung von von im Fahrzeug 1 vorgesehenen Sensoren gelieferten Signalen wird zunächst der Abstand a oder Versatz des Fahrzeuges 1 gegenüber dem Rand der Fahrbahn, insbesondere der Leitplanke 2 ermittelt und in einer Vergleicherschaltung 7 mit einem von einem Speicher 8 zugeführten vorgesehenen kritischen Abstand aₖᵣᵢₜ verglichen. Unterschreitet der tatsächliche Abstand a den kritischen Abstand aₖᵣᵢₜ, so gibt die Vergleicherschaltung 7 ein entsprechendes Signal 13 an eine Ansteuerschaltung 9 weiter, die zur Ansteuerung und Auslösung verschiedener Rückhaltemittel vorgesehen ist, z. B. irreversible Rückhaltemittel 10, wie Airbags, pyrotechnisch zündbare Gurtstraffer und dgl., und reversible Rückhaltemittel 11, wie elektromotorisch ansteuerbare Gurtstraffer, wobei die Ansteuerschaltung 9 im wesentlichen aufgrund anderer Signale 12 in herkömmlicher Weise arbeitet und auf die Rückhaltemittel 10 und 11 im Kollisionsfall einwirkt.

Das. das Unterschreiten des kritischen Abstandes aₖᵣᵢₜ anzeigende Signal 13 wird erfindungsgemäß zur Ansteuerung reversibler Rückhaltemittel 11 verwendet. Es kann auch zur Vorbereitung der Ansteuerung der irreversiblen Rückhaltemittel 10 genutzt werden, da nicht auszuschließen ist, dass auch eine allmähliche Annäherung zu einer Kollision führen könnte, die das Auslösen der irreversibeln Rückhaltemittel 10 als notwendig erscheinen lässt.

Die potentielle Gefahr für die Insassen eines Fahrzeuges 1 bei einer solchen allmählichen Annäherung an ein fahrbahnrandseitiges Objekt, wie eine Leitplanke 2 kann als abhängig von der Eigengeschwindigkeit V_{eigen} des Fahrzeuges 1 angesehen werden. Fig. 3 zeigt zwei Fahrzeuge 14 und 15, mit gleicher Fahrzeug-Eigengeschwindigkeit V_{eigen}, jedoch unterschiedlichen Abständen a₁₄ bzw. a₁₅. Es ist einsichtig, dass bei gleicher Eigengeschwindigkeit die Gefahr einer Berührung für das Fahrzeug 15, das der Leitplanke 2 näher ist, erheblich größer ist als bei dem anderen Fahrzeug 14. Empirische Untersuchungen ergaben, dass ab einem bestimmten Abstand von der Leitplanke 2 die Gefahr einer allmählichen Berührung mit der Leitplanke 2 von der Fahrzeuggeschwindigkeit V_{eigen} unabhängig ist. Empirische Untersuchungen zeigten ferner, dass unterhalb einer bestimmten Fahrzeuggeschwindigkeit selbst bei sehr geringem Abstand zur Leitplanke 2 mit einer streifenden Berührung, die für Fahrzeuginsassen gefährlich sein könnte, nicht mehr zu rechnen ist. Es ist daher zweckmäßig, wie in Fig. 1 dargestellt, auch die Eigengeschwindigkeit zu erfassen und ein entsprechendes Signal V_{eigen} der Vergleicherschaltung 7 zuzuführen und ferner die in Fig. 4 schematisch dargestellte Abhängigkeit des kritischen Abstandes aₖᵣᵢₜ von der Eigengeschwindigkeit V_{eigen} in dem Speicher 8 zu speichern und den der jeweiligen Eigengeschwindigkeit zugeordneten kritischen Abstand aₖᵣᵢₜ aus dem Speicher 8 abzurufen und in dem Vergleiches 7 mit dem tatsächliche Abstand a zu vergleichen.

Gemäß einer Weiterbildung der Erfindung ist es zweckmäßig, dann, wenn der tatsächliche Abstand a einen kritischen Abstand aₖᵣᵢₜ unterschreitet, einen akustischen und/oder optischen Alarmgeber 16, schematisch durch einen Lautsprecher dargestellt, anzusteuern, um den Fahrzeuglenker auf diese möglicherweise für die Fahrzeuginsassen gefährliche Situation aufmerksam zu machen.

Dabei können, was nicht im einzelnen dargestellt ist, die Werte für den kritischen Abstand aₖᵣᵢₜ, deren Unterschreiten den Alarmgeber 16 auslöst und deren Unterschreiten die Ansteuerung der irreversiblen Rückhaltemittel 10 auslöst, sich unterscheiden, wobei die Werte im ersteren Fall höher liegen als im letzteren Fall. Der Alarmgeber 16 kann dabei nicht nur von der Ansteuerschaltung 9 aus angesteuert werden, sondern auch direkt vom Vergleicher 7.

Es ist zu erwähnen, dass der Abstand a des Fahrzeuges 1 von der Leitplanke 2 und anderer fahrbahnrandseitiger Objekte mittels bereits üblicher Sensorik, wie Video, Radar, Lidar, Ultraschall und dgl. direkt erfasst bzw. aus entsprechenden Signalen abgeleitet werden kann. Die Eigengeschwindigkeit V_{eigen} des Fahrzeuges 1 kann beispielsweise durch Erfassen der Raddrehzahl ermittelt werden oder aus einem fahrzeugeigenen System, wie über einen Fahrzeugbus CAN, ausgelesen werden.

Wenn die das Signal 13 verursachende Situation nicht mehr vorliegt, also die entsprechende Gefahr nicht mehr vorliegt, werden die reversiblen Rückhaltemittel 11 zurückgesetzt bzw. der Ansteuerung des Alarmgebers 16 beseitigt. Diese Gefahrsituation liegt dann nicht mehr vor, wenn der tatsächliche Abstand a wieder (deutlich) höher ist als der kritische Abstand aₖᵣᵢₜ bzw. wenn das Fahrzeug angehalten hat oder das Fahrzeug (deutlich) unter der minimalen Fahrzeuggeschwindigkeit gemäß der Abhängigkeit nach Fig. 4 liegt.

## Patentansprüche

1. Verfahren zum vorbeugenden Schutz von Fahrzeuginsassen bei gefährlichen Situationen, wobei laufend der Abstand (a) des Fahrzeuges (1) zu Objekten (2) am Fahrbahnrand der Größe nach erfasst wird, wobei festgestellt wird, ob dieser Abstand (a) einen kritischen Abstand (aₖᵣᵢₜ) unterschreitet, und wobei bei einer solchen Feststellung Schutzmaßnahmen eingeleitet werden, **dadurch gekennzeichnet, dass** die Fahrzeug-Eigengeschwindigkeit (V_{eigen}) der Größe nach erfasst wird und das abhängig von der erfassten Fahrzeug-Eigengeschwindigkeit (V_{eigen}) der kritische Abstand (akrit) festgelegt wird.

2. Verfahren nach Anspruch 1, **dadurch gekennzeichnet, dass** bei der Feststellung des Unterschreitens eines ersten kritischen Abstandes Schutzmaßnahmen einer ersten Art eingeleitet werden und bei Feststellen des Unterschreiten eines zweiten kritischen Wertes, der niedriger ist als der erste kritische Wert, Schutzmaßnahmen einer zweiten Art eingeleitet werden.

3. Verfahren nach Anspruch 2, **dadurch gekennzeichnet, dass** die Schutzmaßnahme der ersten Art in einer hör- und/oder sichtbaren Signalisierung an den Fahrzeuglenker besteht.

4. Verfahren nach Anspruch 2 oder 3, **dadurch gekennzeichnet, dass** die Schutzmaßnahme der zweiten Art in einer Aktivierung reversibler Rückhaltemittel (11) und/oder der Vorbereitung irreversibler Rückhaltemittel (10) besteht.

5. Verfahren nach einem der Ansprüche 1 bis 4, **dadurch gekennzeichnet, dass** dann, wenn der erfasste Abstand (a) wieder den kritischen Abstad (aₖᵣᵢₜ) überschritten hat, eingeleitete Schutzmaßnahmen wieder aufgehoben werden.

6. Verfahren nach Anspruch 1, **dadurch gekennzeichnet, dass** die Abhängigkeit so festgelegt ist, dass unterhalb einer vorgegebenen Fahrzeug-Eigengeschwindigkeit (Vₘᵢₙ) der kritische Abstand (aₖᵣᵢₜ) Null ist und oberhalb eines vorgegebenen Abstandes (aₘₐₓ) der kritische Abstand (aₖᵣᵢₜ) fahrzeuggeschwindigkeitsunabhängig ist und zwischen den beiden Wertpaaren die Abhängigkeit zwischen Fahrzeug-Eigengeschwindigkeit (V_{eigen}) und kritischem Abstand (aₖᵣᵢₜ) im wesentlichen linear bzw. nach einer vorgegebenen Funktion verläuft.

## Claims

1. Method for the preventive protection of vehicle occupants in dangerous situations, the distance (a) between the vehicle (1) and objects (2) at the edge of the carriageway being continuously sensed in terms of size, during which process it is determined whether this distance (a) drops below a critical distance (aₖᵣᵢₜ) and during such a sensing process protective measures are initiated, **characterized in that** the vehicle's own velocity (V_{eigen}) is sensed in terms of its magnitude, and **in that** the critical distance (akrit) is detected as a function of the vehicle's sensed own velocity (V_{eigen}).

2. Method according to Claim 1, **characterized in that** when it is sensed that the distance drops below a first critical distance, protective measures of a first type are initiated, and when it is sensed that the distance drops below a second critical value which is less than the first critical value, protective measures of a second type are initiated.

3. Method according to Claim 2, **characterized in that** the protective measure of the first type is composed of audible and/or visible signalling to the driver of the vehicle.

4. Method according to Claim 2 or 3, **characterized in that** the protective measure of the second type comprises activating reversible restraint means (11) and/or preparing irreversible restraint means (10).

5. Method according to one of Claims 1 to 4,
**characterized in that** if the sensed distance (a) has exceeded the critical distance (aₖᵣᵢₜ) again, initiated protective measures are cancelled again.

6. Method according to Claim 1, **characterized in that** the dependence is defined in such a way that below a predefined value of the vehicle's own velocity (Vₘᵢₙ), the critical distance (aₖᵣᵢₜ) is zero, and above a predefined distance (aₘₐₓ) the critical distance (aₖᵣᵢₜ) is independent of the velocity of the vehicle, and between the two value pairs the dependence between the vehicle's own velocity (V_{eigen}) and the critical distance (aₖᵣᵢₜ) varies essentially linearly or according to a predefined function.

## Revendications

1. Procédé de protection préventive des occupants d'un véhicule dans des situations dangereuses, selon lequel
on saisit en permanence la distance (a) du véhicule (1) par rapport à des objets (2) du bord de la chaussée selon leur taille,
on détermine si cette distance (a) passe en dessous d'une distance critique (a_{crit}), et lorsqu'une telle constatation est faite on prend des mesures protectrices,
**caractérisé en ce qu'**
on saisit la grandeur de la vitesse propre du véhicule (Vₚᵣₒₚᵣₑ) et en fonction de cette vitesse propre saisie du véhicule (Vₚᵣₒₚᵣₑ) on fixe la distance critique (a_{crit}).

2. Procédé selon la revendication 1,
**caractérisé en ce qu'**
en constatant le dépassement vers le bas d'une première distance critique on prend des mesures protectrices d'un premier type et lorsqu'on constate le dépassement vers le bas d'une seconde valeur critique, inférieure à la première valeur critique, on prend des mesures protectrices d'un second type.

3. Procédé selon la revendication 2,
**caractérisé en ce que**
les mesures protectrices du premier type sont constituées par une signalisation auditive et/ou visuelle destinée au conducteur.

4. Procédé selon les revendications 2 ou 3,
**caractérisé en ce que**
les mesures protectrices du second type résident dans l'activation de moyens de retenue réversibles (11) et/ ou de la préparation de moyens de retenue irréversibles (10).

5. Procédé selon l'une des revendications 1 à 4,
**caractérisé en ce que**
lorsque la distance saisie (a) a de nouveau dépassé la distance critique (a_{crit}) on neutralise les moyens de protection mis en oeuvre.

6. Procédé selon la revendications 1,
**caractérisé en ce qu'**
on fixe la dépendance comme suit en dessous d'une vitesse propre, prédéfinie (Vₘᵢₙ) du véhicule, la distance critique (a_{crit}) est nulle, au-dessus d'une distance prédéfinie (aₘₐₓ), la distance critique (a_{crit}) en indépendante de la vitesse du véhicule et entre les deux paires de valeurs, la relation entre la vitesse propre du véhicule (Vₚᵣₒₚᵣₑ) et la distance critique (a_{crit}) est essentiellement linéaire ou correspond à une fonction prédéfinie.
